# EUROPEAN PATENT APPLICATION

(11) **EP 4 840 725 A1**
(43) Date of publication of application: **18.11.2026**
(21) Application number: 26171123.8
(22) Date of filing: 08.04.2026
(51) Int. Cl.: B62D 15/02

(54) **PARKING ASSISTANCE DEVICE**

(30) Priority: 16.05.2025 JP 2025082399
(71) Applicant: AISIN CORPORATION, Kariya, Aichi 448-8650 (JP)
(72) Inventor: YAMAMOTO, Shota, Kariya, Aichi, 448-8650 (JP); WATANABE, Hiroyuki, Kariya, Aichi, 448-8650 (JP)
(74) Representative: TBK

(57) **Abstract**

Provided is a parking assistance device (1) in which, during execution of parking assistance for a vehicle (2) for parking at a parking target position, when there is a new candidate for the parking target position different from the parking target position, a proposal is made to change the parking target position to the new candidate for the parking target position.

## Description

### TECHNICAL FIELD

This disclosure relates to a parking assistance device that performs parking assistance for a vehicle.

### BACKGROUND DISCUSSION

In the related art, there is known a parking assistance device that assists parking of a vehicle when parking the vehicle. In such a parking assistance device, a parking target position serving as a target for parking the vehicle is set in advance, and parking assistance is performed by, for example, automatically moving the vehicle to the set parking target position or performing guidance to guide the vehicle to the parking target position. In the setting of the parking target position, for example, as disclosed in JP 2016-16681A, a detection sensor such as a camera provided in the vehicle is used to detect an available parking area around the vehicle, and the detected parking area can be set as the parking target position.

Here, in JP 2016-16681A (paragraphs 0022 to 0028) (Reference 1), a sensor such as the camera provided in the vehicle is used to detect the available parking area around the vehicle, but it is also possible to detect the parking area at a position away from the vehicle, depending on the type of the sensor. Alternatively, it is also possible to acquire information on the parking area from, for example, a server that manages a parking lot instead of by the sensor provided in the vehicle, and even in such a case, it is possible to detect the parking area at a position away from the vehicle. In particular, when the parking area at a position away from the vehicle is detected and the detected parking area is set as the parking target position, the following problem occurs.

First, since it is difficult to accurately detect a state of the parking area at a distant position using a sensor or the like, the parking area set as the parking target position may not be actually appropriate for parking the vehicle. Second, since it is difficult for a user to grasp the state of the parking area at a distant position, when there is a plurality of parking areas, it is difficult for the user to select an appropriate parking target position from the plurality of parking areas before starting parking assistance.

However, despite the existence of the above problems, in the parking assistance device of the related art, basically, once the parking target position is set and the parking assistance is started, the user is not allowed to change the parking target position even when it is found that the parking target position is not appropriate for parking thereafter or a more appropriate candidate for the parking target position is found.

A need thus exists for a parking assistance device capable of making, when there is a new candidate for a parking target position different from the parking target position, a proposal to change the parking target position to the new candidate for the parking target position during execution of parking assistance.

### SUMMARY

According to an aspect of this disclosure, there is provided a parking assistance device in which, during execution of parking assistance for a vehicle for parking at a parking target position, when there is a new candidate for the parking target position different from the parking target position, a proposal is made to change the parking target position to the new candidate for the parking target position.

The phrase "during execution of parking assistance for a vehicle, ...when there is a new candidate for the parking target position" includes a case in which a device side grasps the presence of the new candidate for the parking target position before the start of the parking assistance and a case in which the device side grasps the presence of the new candidate for the parking target position for the first time after the start of the parking assistance.

The term "parking assistance" may be assistance for performing vehicle control for moving the vehicle to the parking target position, or may be assistance for performing guidance to guide the vehicle to the parking target position.

The phrase "during execution of parking assistance" may be, for example, a period from when the parking target position is set to when parking is completed, or may be a period from when the vehicle control or guidance for parking is actually started. It may be a timing at which a change to another parking target position is possible. It may be until a current parking target position can be reliably sensed by a sensor or the like (that is, until it can be confirmed that the vehicle can be parked at the parking target position).

According to the parking assistance device disclosed here, having the above configuration, when the presence of a more appropriate candidate for the parking target position can be grasped after the parking assistance is started, it is possible to give a user an opportunity to change the parking target position to the new candidate for the parking target position.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to an embodiment;
Fig. 2 is a diagram illustrating a LiDAR sensor provided in the vehicle;
Fig. 3 is a block diagram illustrating a configuration of a parking assistance device according to the present embodiment;
Fig. 4 is a flowchart of a parking assistance processing program according to the present embodiment;
Fig. 5 is a diagram illustrating a method for converting a captured image into an overhead image;
Fig. 6 is a diagram illustrating a method for generating the overhead image;
Fig. 7 is a diagram illustrating a range in which sensing cannot be performed by the LiDAR sensor;
Fig. 8 is a diagram illustrating an example of a target parking frame image displayed on a liquid crystal display;
Fig. 9 is a diagram illustrating a method for calculating a parking trajectory;
Fig. 10 is a diagram illustrating an initial target position and another target candidates;
Fig. 11 is a diagram illustrating a case in which it is determined that there is another target candidate having an evaluation score higher than that of the initial target position; and
Fig. 12 is a diagram illustrating an example of a proposal screen displayed on the liquid crystal display.

### DETAILED DESCRIPTION

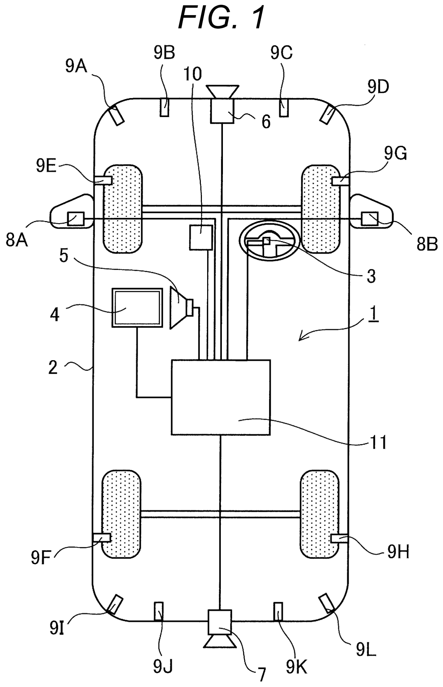

Hereinafter, a parking assistance device according to an embodiment disclosed here will be described in detail with reference to the drawings. First, a vehicle 2 equipped with a parking assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled automobile is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

For example, the autonomous driving assistance may be performed only under a specific situation, such as when parking or leaving a garage, may be performed for all road sections, or may be performed only while the vehicle travels on a specific road section (for example, a highway with a gate (manned or unmanned, paid or free) at a boundary). In the present embodiment, assisted traveling by the autonomous driving assistance is performed at least for traveling (that is, parking assistance) to a parking space when the vehicle parks.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, a brake, and the like is automatically performed such that the vehicle travels along a generated travel trajectory at a speed according to a speed plan generated in the same manner. In particular, when the parking assistance is performed, a candidate designated by the user from among candidates of the parking target position displayed on an in-vehicle display as described later, is set as a current parking target position. Then, the vehicle control for calculating a parking trajectory to the set parking target position, causing the vehicle to enter the parking target position along the calculated parking trajectory, and completing parking is automatically performed. However, only a steering operation may be automatically performed, and the drive source and the brake may be controlled based on a manual operation. Alternatively, only an instruction of a parking operation may be performed, and the parking operation may be manually performed by the user. When the above parking assistance is performed, it is desirable to display a landscape (which may be an actual view or CG) around the vehicle on the in-vehicle display and display the parking target position and the obstacles (for example, a parked vehicle) around the parking target position.

As illustrated in Fig. 1, the vehicle 2 includes an operation unit 3 that receives an operation from an occupant, a liquid crystal display 4 that displays a bird's-eye view image or an overhead image of the surroundings of the vehicle and other information on driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that detect the obstacles around the vehicle, a light detection and ranging (LiDAR) sensor 10 that uses a range farther in a traveling direction as a detection target, and a driving assistance electronic control unit (ECU) 11 that performs various types of arithmetic processing based on received information. The parking assistance device 1 includes the driving assistance ECU 11.

Hereinafter, each component provided in the vehicle 2 will be described. First, the operation unit 3 is disposed, for example, on a front surface of a steering wheel and includes operation buttons or the like that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. Particularly, in the present embodiment, the operation unit 3 also includes a touch panel provided on a front surface of the liquid crystal display 4. The user operates the touch panel to designate the parking target position and change the parking target position at the time of parking assistance as described later. The operation unit 3 may include a microphone and an audio recognition device.

The liquid crystal display 4 is a type of display device, is provided on an instrument panel of the vehicle 2, and displays the overhead image and the bird's-eye view image of the surroundings of the vehicle generated by performing viewpoint conversion and synthesis processing on captured images captured by cameras including the front camera 6, the rear camera 7, and the side cameras 8A and 8B, as vehicle surroundings images illustrating the surroundings of the vehicle during the execution of autonomous driving assistance. However, instead of an image of the actual view, a virtual image in which the surroundings of the vehicle is reproduced by CG may be displayed. When the parking assistance is started, a target parking frame image indicating a candidate for the parking target position is displayed superimposed on the above vehicle surroundings image. When there is a new candidate for the parking target position different from the currently set parking target position during the parking assistance, a proposal screen for proposing to change the parking target position to the new candidate for the parking target position under a predetermined condition is also displayed. The liquid crystal display 4 may also be used in a navigation device.

The speaker 5 is provided on the instrument panel of the vehicle 2 and outputs a guidance voice, a warning sound, or the like related to the driving assistance. When there is a new candidate for the parking target position different from the currently set parking target position during the parking assistance, a voice for proposing to change the parking target position to the new candidate for the parking target position under a predetermined condition may be output. The speaker 5 may also be used in the navigation device.

The front camera 6 is, for example, an image-capturing device including a camera using a solid-state imaging element such as a CCD, and is provided, for example, above a front bumper of the vehicle 2 or on a back side of a rear-view mirror with an optical axis direction thereof being directed to the front in the traveling direction of the vehicle.

The rear camera 7 is also an image-capturing device including a camera using a solid-state imaging element such as a CCD, and is provided, for example, in the vicinity of an upper center of a license plate attached to the rear of the vehicle 2, with an optical axis direction thereof being directed to the rear of the vehicle.

The side cameras 8A and 8B are also image-capturing devices each including a camera using a solid-state imaging element such as a CCD, and are attached to, for example, left and right side mirrors of the vehicle 2, with optical axis directions thereof being directed to lateral sides of the vehicle.

Then, the driving assistance ECU 11 generates the overhead image and the bird's-eye view image of the surroundings of the vehicle by performing the viewpoint conversion and the synthesis processing on the captured images captured by the cameras including the front camera 6, the rear camera 7, and the side cameras 8A and 8B (hereinafter collectively referred to as cameras). During the execution of the autonomous driving assistance, by performing image recognition processing on the captured image, a partition line, a parking frame line, and an obstacle (another vehicle, a pedestrian, a bicycle, a wall, a guard rail, and other structures) around the vehicle are detected, and the autonomous driving assistance is executed based on a detection result thereof.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from transmission to reception. The ultrasonic sensors 9A to 9L can generate an output signal (including the distance to the detected object) corresponding to a reception result of the received wave and output the output signal to a control unit. Examples of objects to be detected by the ultrasonic sensors 9A to 9L include an obstacle that needs to be avoided when the vehicle 2 travels, such as a person, a bicycle, other vehicles, and a wall. In particular, the ultrasonic sensors 9A to 9L are used to detect an object near the vehicle 2. As the distance measurement sensor, a millimeter wave sensor or a laser sensor may be used instead of the ultrasonic sensor.

Provision positions and provision directions of the respective ultrasonic sensors 9A to 9L can be set appropriately. In the present embodiment, to set a detection range of the object to all orientations including the front, rear, and left and right directions of the traveling direction of the vehicle 2, the ultrasonic sensors 9A to 9D are provided on a front surface of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left side such that the transmission direction of the probe wave is leftward in the traveling direction of the vehicle. The ultrasonic sensors 9G and 9H are provided on a right side surface of the vehicle 2 being directed to a right side such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from each other, a specific position (a relative position with respect to the vehicle) of the object can also be specified by triangulation using a measured distance of a previous position, a measured distance of a current position, and a movement distance therebetween as the vehicle moves.

Meanwhile, the LiDAR sensor 10 is disposed, for example, on the back side of the rear-view mirror, emits a laser light to the front of the vehicle 2, and detects the object based on information on the laser light reflected by the object. Specifically, the LiDAR sensor 10 is a type of sensing device capable of detecting a distance (distance measurement value) to the object reflecting the laser light by measuring a time from the emission to the light reception. More specifically, the LiDAR sensor 10 includes, for example, a light source that emits the laser light, a photodiode that receives the reflected laser light, and a control circuit that measures the time from the emission to the light reception. The LiDAR sensor 10 is configured to generate an output signal corresponding to a sensing result and output the output signal to the control unit of the parking assistance device 1.

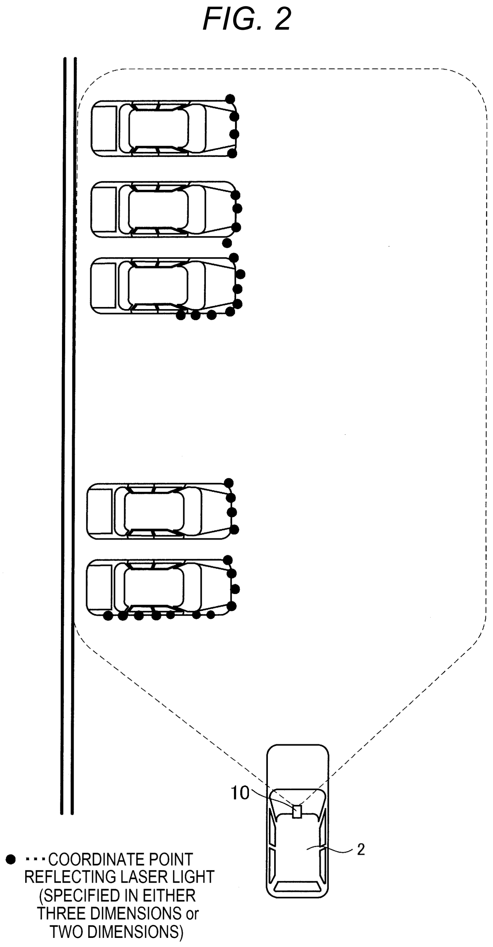

In particular, in the present embodiment, a 3D LiDAR capable of three-dimensional sensing is used as the LiDAR sensor 10, and three-dimensional information can be obtained by superimposing a plurality of laser lights in a vertical direction and rotating the laser lights in a horizontal direction to perform sensing (scanning). Here, the 3D LiDAR can more accurately measure a position and a shape of the object around the vehicle by collecting distance information as a collection of points (point group data) as illustrated in Fig. 2. Specifically, it is possible to recognize more information, such as the position, the shape, a size, and a moving speed of the object with high accuracy by visualizing a reflection point reflecting the laser light on a three-dimensional point cloud. Examples of objects to be detected by the LiDAR sensor 10 include, similar to the ultrasonic sensors 9A to 9L, an obstacle that needs to be avoided when the vehicle 2 travels, such as a person, a bicycle, other vehicles, and a wall. However, the LiDAR sensor 10 can perform sensing over a longer distance than an ultrasonic sensor or a millimeter wave sensor, and, for example, can perform sensing in a range of several tens of meters away from a host vehicle.

Then, in the present embodiment, the parking assistance device 1 detects a parking section that is a candidate for the parking target position at a position away from a host vehicle position by using the LiDAR sensor 10 when performing the parking assistance. However, it is desirable to detect the parking section not necessarily using only the LiDAR sensor 10, but also, for example, using image recognition using a camera. A range near the vehicle can also be detected using the above ultrasonic sensors 9A to 9L.

Although a 3D LiDAR capable of three-dimensional sensing is used as the LiDAR sensor 10 in the above example, a 2D LiDAR may be used. A sensor other than the LiDAR sensor may be used as long as the sensor is capable of sensing a wide range.

A provision position and a provision direction of the LiDAR sensor 10 can be set appropriately. In the present embodiment, to set a detection range of the object to the front of the vehicle 2 in the traveling direction, for example, the LiDAR sensor 10 is provided on the front surface of the vehicle 2, being directed to the traveling direction such that an emission direction of the laser light is forward in the traveling direction of the vehicle. However, the LiDAR sensor 10 can be provided on a side surface or the rear surface other than the front surface of the vehicle 2, and in this case, the LiDAR sensor 10 can also sense the side and the rear of the vehicle 2.

The driving assistance ECU 11 is an electronic control unit that performs various types of processing related to the autonomous driving assistance. The driving assistance ECU 11 is connected to the operation unit 3, the liquid crystal display 4, the speaker 5, the front camera 6, the rear camera 7, the side cameras 8A and 8B, the ultrasonic sensors 9A to 9L, and the LiDAR sensor 10 described above via an in-vehicle network such as a CAN. The driving assistance ECU 11 is also connected to various sensors such as a GPS, a vehicle speed sensor, an acceleration sensor, a gyro sensor, a steering sensor, and a shift position sensor, which are mounted on the vehicle 2, as well as a navigation device, which is an in-vehicle device. A detailed configuration of the driving assistance ECU 11 will be described later.

In addition to the components illustrated in Fig. 1, the vehicle 2 includes basic components as the vehicle 2. However, only a configuration related to control of the autonomous driving assistance (particularly parking assistance) and control related to the configuration will be described.

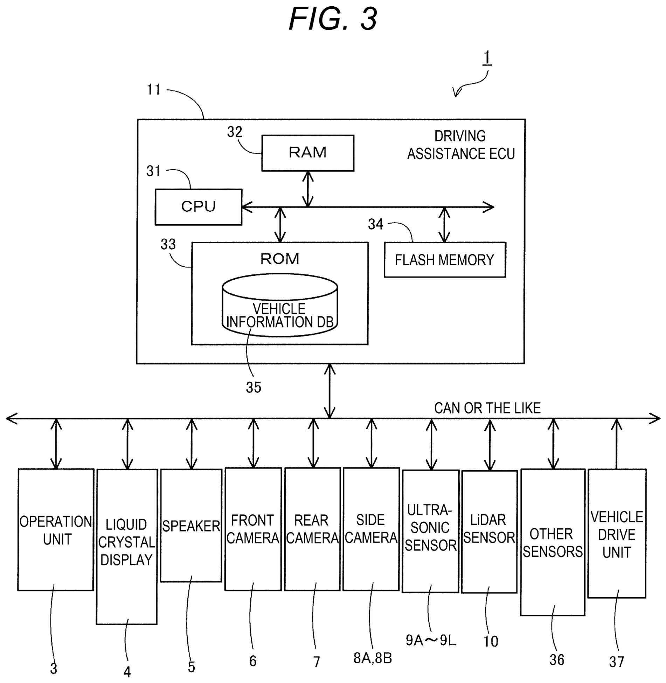

Next, the parking assistance device 1 provided in the above vehicle 2 will be described in detail, particularly the driving assistance ECU 11. Fig. 3 is a block diagram illustrating a configuration of the parking assistance device 1 according to the present embodiment.

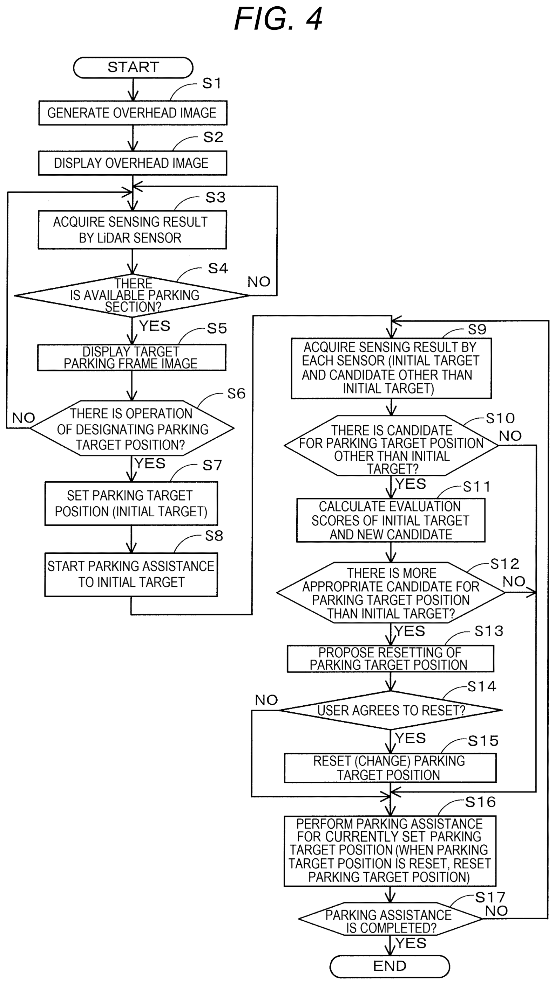

As illustrated in Fig. 3, the driving assistance electronic control unit (ECU) 11 is an electronic control unit that performs overall control of the parking assistance device 1, and includes a CPU 31 serving as an arithmetic device and a control device and internal storage devices, such as a RAM 32 that is used as a working memory when the CPU 31 performs various types of arithmetic processing and that stores the sensing result by the LiDAR sensor 10, travel trajectory data when the travel trajectory is calculated, and the like, a ROM 33 in which a parking assistance processing program (see Fig. 4) to be described later and the like are recorded in addition to control programs, and a flash memory 34 that stores a program read from the ROM 33. The driving assistance ECU 11 executes various functions as processing algorithms. For example, the functions include a function of detecting, by the LiDAR sensor 10 in which the traveling direction of the vehicle is set as the detection range, a parking section located in the traveling direction of the vehicle and facing a passage before the vehicle travels, a function of performing the parking assistance after setting the detected parking section as the parking target position, and a function of performing a proposal to change the parking target position to a new candidate for the parking target position when there is a new candidate for the parking target position different from the parking target position during the execution of parking assistance for the vehicle for parking the vehicle at the set parking target position.

The driving assistance ECU 11 is also connected to various sensors 36 for detecting the current position or behaviors of the vehicle, such as a GPS, a vehicle speed sensor, an acceleration sensor, a gyro sensor, a steering sensor, and a shift position sensor, and a drive unit 37 of the vehicle, such as a steering wheel, a brake, an accelerator, and a transmission. The autonomous driving assistance for the vehicle 2 is performed by detecting the current position and the current behavior of the vehicle based on detection results of these sensors 36 and controlling the drive unit 37. As a specific content of the autonomous driving assistance, for example, in the parking assistance, a current position of the vehicle and a position of an obstacle around the vehicle are detected at any time, and vehicle control of a steering wheel, a drive source, a brake, and the like is performed such that the vehicle travels along the generated parking trajectory. In particular, when an obstacle is detected within a predetermined distance from the vehicle by the ultrasonic sensors 9A to 9L or the LiDAR sensor 10 during traveling by parking assistance, control for decelerating and stopping the vehicle is performed, or avoidance control for avoiding the obstacle is performed. However, only a steering operation may be automatically performed, and the drive source and the brake may be controlled based on a manual operation. Alternatively, only the instruction of the parking operation may be performed, and the parking operation may be manually performed by the user.

The ROM 33 includes vehicle information DB 35, and the vehicle information DB 35 stores various types of information on the vehicle 2. For example, provision positions (heights from the ground surface and positions in a left-right direction) and detection axes (optical axes and angles of view regarding the camera) of the cameras, the ultrasonic sensors 9A to 9L, and the LiDAR sensor 10 provided in the vehicle 2, a total length, a vehicle width, a wheelbase, and a minimum turning radius are stored. Such pieces of information are input in advance by the occupant or a person on a vehicle manufacturer's side.

Subsequently, the parking assistance processing program executed by the driving assistance ECU 11 in the parking assistance device 1 having the above configuration will be described with reference to Fig. 4. Fig. 4 is a flowchart of the parking assistance processing program according to the present embodiment. Here, the parking assistance processing program is a program for performing the parking assistance, particularly when the vehicle is parked as one of the autonomous driving assistance, and the program is executed after an accessory power supply (ACC) of the vehicle 2 is turned on and a start condition for starting the parking assistance is satisfied. The program illustrated in the flowchart in Fig. 4 is stored in the RAM 32 or the ROM 33 provided in the parking assistance device 1 and is executed by the CPU 31.

The start condition for starting the parking assistance may be when the user operates the operation unit 3 to select to start the parking assistance, or when it is detected that the vehicle enters a parking lot, when it is determined that the vehicle has arrived at a set destination, or when it is detected that the vehicle has approached a parking lot.

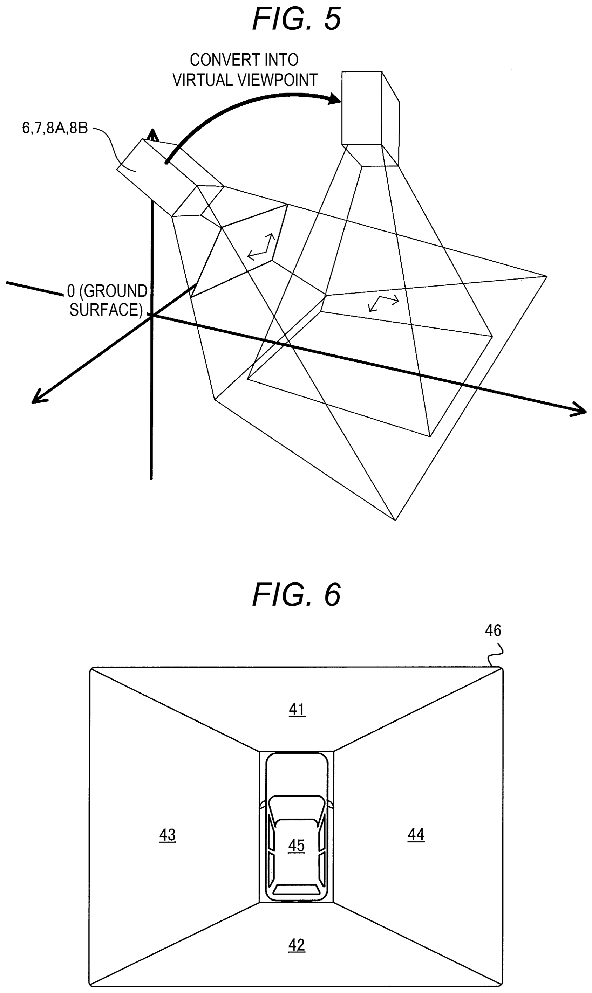

First, in step (hereinafter abbreviated as S) 1, the CPU 31 generates an overhead image of the surroundings of the vehicle looking down vertically from above based on the real-time captured images captured by the front camera 6, the rear camera 7, and the side cameras 8A and 8B. A method for generating the overhead image is described below. As illustrated in Fig. 5, the real time captured image captured by each camera is projected onto a virtual projection surface that is a horizontal plane corresponding to the height from the ground surface, and the captured image projected onto the virtual projection surface is converted into an image viewed from a virtual viewpoint looking down vertically from above the vehicle 2, thereby generating the overhead image of each camera. The conversion (viewpoint conversion) to the image from the virtual viewpoint is performed by first converting each coordinate in a captured image coordinate system set along a plane perpendicular to the optical axis of the camera into each coordinate in a ground surface coordinate system set along the ground surface, and then converting each coordinate into each coordinate in an overhead image coordinate system. Conversion formulas used for coordinate conversion are already known, and therefore, the description thereof will be omitted. Then, as illustrated in Fig. 6, an overhead image 41 obtained by converting the viewpoint of the captured image captured by the front camera 6, an overhead image 42 obtained by converting the viewpoint of the captured image captured by the rear camera 7, an overhead image 43 obtained by converting the viewpoint of the captured image captured by the side camera 8A, and an overhead image 44 obtained by converting the viewpoint of the captured image captured by the side camera 8B are synthesized (connected), and an illustration image 45 schematically indicating the host vehicle is inserted between the overhead images 41 to 44 to generate an overhead image 46.

Subsequently, in S2, the CPU 31 displays the overhead image 46 created in S1 on the liquid crystal display 4 as the vehicle surroundings image illustrating the surroundings of the vehicle. However, as the vehicle surroundings image, a virtual image in which the surroundings of the vehicle is reproduced by CG may be displayed instead of the image of the actual view.

In the following description, an example in which the overhead image 46 of the surroundings of the vehicle looking down vertically from above is displayed as the vehicle surroundings image will be described, but it is also possible to display a bird's-eye view image of the surroundings of the vehicle looking obliquely downward from above instead of the overhead image. Alternatively, a screen may be divided into two screens to display both the overhead image and the bird's-eye view image. In the bird's-eye view image, a position of the viewpoint can be set, for example, in the host vehicle, and in this case, a diagram in which the surroundings of the vehicle is visually recognized from an inside of the host vehicle can be displayed as the vehicle surroundings image. Alternatively, the real-time captured image captured by any of the front camera 6, the rear camera 7, and the side cameras 8A and 8B can be displayed without being processed. Even when the bird's-eye view image or the captured image captured by the camera is displayed as it is, instead of the overhead image 46, the target parking frame image to be described later is superimposed and displayed on the image.

The generation and the display of the overhead image 46 in S1 and S2 are repeatedly executed until the parking assistance is ended, and the overhead image 46 illustrating the surroundings of the vehicle in real time is continuously displayed on the liquid crystal display 4.

Next, in S3, the CPU 31 acquires the sensing result of the LiDAR sensor 10. As described above, the vehicle 2 includes the LiDAR sensor 10 capable of three-dimensional sensing as a sensor for detecting a situation in front in the traveling direction, and as illustrated in Fig. 2, the point group data in which the reflection point reflecting the laser light is specified in a three-dimensional space is acquired. It is possible to use a 2D LiDAR, and in this case, point group data in which the reflection point is specified in a two-dimensional space is acquired. The LiDAR sensor 10 can perform sensing in a wider range than an ultrasonic sensor or a millimeter wave sensor, and in S3, a sensing result is acquired for a range of several tens of meters ahead in the traveling direction of the vehicle, that is, an area in which the vehicle is not traveling.

In S3, in addition to the sensing result of the LiDAR sensor 10, image recognition results for the captured images captured by the cameras including the front camera 6, the rear camera 7, and the side cameras 8A and 8B, and detection results of the ultrasonic sensors 9A to 9L may be acquired. Then, in addition to the sensing result of the LiDAR sensor 10, the CPU 31 may use the image recognition results of the cameras and the detection results of the ultrasonic sensors 9A to 9L to detect a candidate for the parking target position to be described later.

Next, in S4, the CPU 31 determines whether there is a parking section in which the vehicle can be parked in the traveling direction of the vehicle. Specifically, when there is a space large enough to park a vehicle and there is no obstacle such as another vehicle in the space (however, this does not necessarily mean that there are no obstacles, but rather that there are no obstacles within a sensing range), the space is specified as a parking section in which the vehicle can be parked, and it is determined whether at least one or more such parking sections can be specified. When there are a plurality of parking sections in which the vehicle can be parked, the corresponding plurality of parking sections are specified. The parking section specified in S4 is a candidate for the parking target position in the subsequent parking assistance for the vehicle 2.

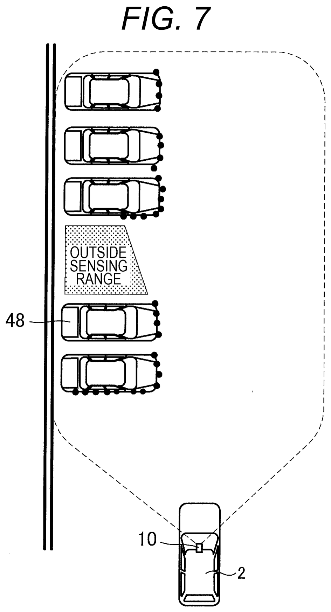

When the LiDAR sensor 10 is used, the position, the shape, the size, and the like of an object in front of the vehicle in the traveling direction can be recognized with high accuracy by visualizing the reflection point reflecting the laser light in the three-dimensional point cloud as illustrated in Fig. 2. Then, the CPU 31 determines whether there is a parking section in which the vehicle can be parked in the traveling direction of the vehicle based on the recognition results. In particular, since the LiDAR sensor 10 can perform sensing up to a range of several tens of meters ahead in the traveling direction of the vehicle, it is possible to specify not only the vicinity of the vehicle but also a parking section located at a position away from the vehicle to some extent, for example, a position facing a passage before the vehicle travels. However, while sensing by the LiDAR sensor 10 is possible up to a distance far away from the host vehicle, the range in which sensing is possible is limited to a range in which the laser light reaches from the host vehicle position. Therefore, for example, as illustrated in Fig. 7, when a large obstacle 48 such as another vehicle is present, sensing cannot be performed for a range hidden by the obstacle. Therefore, another obstacle (for example, a small vehicle, a two-wheeled vehicle, or a color cone (registered trademark)) may be present in such a range. Therefore, the parking section in which it is determined that the vehicle can be parked at a determination time point of S4 may actually be a parking section in which parking is not possible or in which parking is difficult.

The determination in S4 is not necessarily performed only by the LiDAR sensor 10, and, for example, may also be performed by image recognition by the camera. The range near the vehicle can also be determined using the ultrasonic sensors 9A to 9L.

Then, if it is determined that there is at least one parking section in which the vehicle can be parked in the traveling direction of the vehicle (YES in S4), the processing proceeds to S5. On the other hand, if it is determined that there is no parking section in which the vehicle can be parked in the traveling direction of the vehicle (NO in S4), the processing returns to S3, and sensing by the LiDAR sensor 10 or other sensors is continuously performed until the parking section in which the vehicle can be parked is detected.

In S5, the CPU 31 superimposes and displays the target parking frame image on the parking section in which the vehicle can be parked, which is specified in S4, in the overhead image 46 displayed in S2. When a plurality of parking sections in which the vehicle can be parked are specified, the target parking frame image is superimposed and displayed on each of the plurality of parking sections.

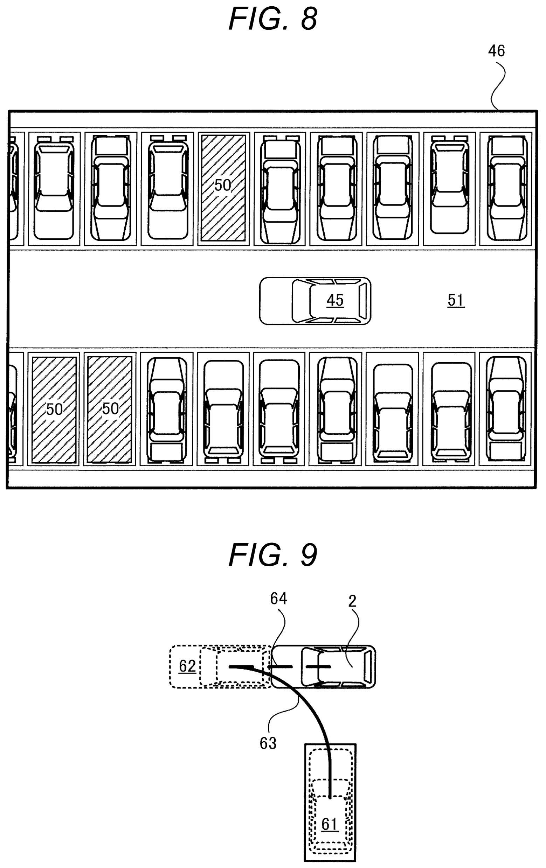

Here, Fig. 8 is a diagram illustrating an example of the overhead image 46 displayed on the liquid crystal display 4. As illustrated in Fig. 8, target parking frame images 50 are displayed at positions of the parking sections in which the vehicle can be parked included in the overhead image 46. The target parking frame image 50 has a rectangular shape corresponding to a size of the vehicle 2, and basically has a fixed shape regardless of a size of the parking section. Then, when the target parking frame image 50 is displayed in the overhead image 46, an orientation of the target parking frame image 50 is a direction intersecting a passage 51 in a case of a parallel parking section, and is a direction parallel to the passage 51 in a case of a perpendicular parking section. Whether the parking section in which the target parking frame image 50 is to be disposed is a parallel parking section or a perpendicular parking section is determined in S4. Then, by visually recognizing the overhead image 46 displayed on the liquid crystal display 4, the user can grasp the parking section in which the host vehicle can be parked, that is, the candidate for the parking target position.

The liquid crystal display 4 is provided with the touch panel as the operation unit 3, and the user can freely designate a desired parking target position from the target parking frame image 50 included in the overhead image 46 displayed on the liquid crystal display 4. In S6, the CPU 31 determines whether an operation of designating the above parking target position is performed.

Then, if it is determined that the operation of designating the parking target position is performed (YES in S6), the processing proceeds to S7. On the other hand, if it is determined that the operation of designating the parking target position is not performed (NO in S6), the processing returns to S3. Thereafter, when a parking section in which the vehicle can be parked is newly detected, a new target parking frame image 50 is displayed to be superimposed on the parking section. In the overhead image 46, in addition to the target parking frame image 50, obstacles (for example, parked vehicles) in the vicinity are also displayed, and thus warning images for these obstacles may also be displayed.

In S7, the CPU 31 sets the parking section corresponding to the target parking frame image 50 designated by the user as the parking target position that is a target parking position in the parking assistance to be performed thereafter. Hereinafter, the parking target position set in S7, that is, the parking target position initially set in the parking assistance, is referred to as an "initial target position".

Subsequently, in S8, the CPU 31 starts vehicle control for parking at the initial target position set in S7. First, the CPU 31 calculates the parking trajectory, which is a travel trajectory for parking the host vehicle from the current position of the vehicle to the initial target position. For example, when calculation of a parking trajectory when the parallel parking is performed is described as an example, first, the CPU 31 sets a reverse start position 62 (that is, a position at which the host vehicle begins reversing to park) when the host vehicle is parked at an initial target position 61 designated by the user as illustrated in Fig. 9. The reverse start position 62 is determined with respect to the initial target position 61 in consideration of a length, a width, a minimum turning radius, and the like of the host vehicle.

Subsequently, the CPU 31 calculates a turning trajectory 63 from the reverse start position 62 to the initial target position 61. Specifically, a path is set such that the host vehicle can enter the initial target position 61 without coming into contact with the surrounding obstacles, and turns at an optimum steering angle derived from a turning characteristic of the vehicle. For example, a travel trajectory turning with the minimum turning radius is calculated as the turning trajectory 63. The turning trajectory 63 may be a circular arc or a clothoid curve, and may include a linear trajectory as a part thereof. The CPU 31 also calculates a preparation trajectory 64 from the current position of the host vehicle to the reverse start position 62. The preparation trajectory 64 may be a linear trajectory as illustrated in Fig. 9, or may include a circular arc or a clothoid curve, depending on a positional relationship between the current position of the host vehicle and the reverse start position 62. In addition, if a turn is required to correct a vehicle heading, the CPU 31 also calculates a trajectory of the turn.

Thereafter, the CPU 31 starts the parking assistance according to the calculated parking trajectory. Specifically, the current position of the host vehicle and the position of the surrounding obstacle are detected at any time, and vehicle control of the steering, the drive source, the brake, and the like is automatically performed such that the vehicle travels at a designated speed along the generated parking trajectory. If a turn is required to allow the vehicle to enter the parking section, shift positions are automatically switched. The above parking assistance is continuously performed until parking at the parking target position is completed.

However, in the movement of the vehicle along the parking trajectory, only a steering operation may be automatically performed, and the drive source and the brake may be controlled based on a manual operation. Alternatively, the movement of the vehicle may be performed not by autonomous driving but by manual driving. In this case, as the parking assistance, the parking trajectory is displayed on the liquid crystal display 4, and a timing of turning the steering wheel is guided by voice.

Next, in S9, the CPU 31 acquires the sensing result of the LiDAR sensor 10 in parallel with the parking assistance after the parking assistance is started in S8. In addition to the sensing result of the LiDAR sensor 10, the image recognition results for the captured images captured by the cameras including the front camera 6, the rear camera 7, and the side cameras 8A and 8B, and the detection results of the ultrasonic sensors 9A to 9L are acquired.

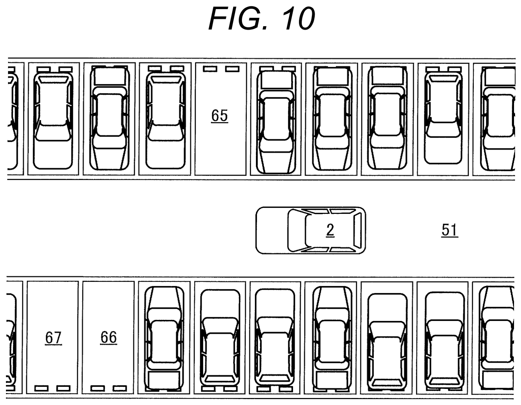

Here, in addition to a detection result for the initial target position set as the parking target position at the present time, the sensing results of the various sensors acquired in S9 include, when a new candidate (hereinafter referred to as "another target candidate") for the parking target position different from the initial target position is present within the detection range, a detection result of another target candidate. For example, as illustrated in Fig. 10, when there are available parking sections 65 to 67 ahead in the traveling direction of the vehicle 2, the sensing result acquired during the parking assistance in a situation in which the parking section 66 is set at the initial target position includes not only a detection result of the parking section 66 but also detection results of the parking section 65 and the parking section 67.

Thereafter, in S10, the CPU 31 determines whether there is at least one another target candidate that is a candidate for the parking target position other than the initial target position.

Here, another target candidate includes a parking section in which the vehicle can be parked, which is already detected before the start of the parking assistance and a parking section in which the vehicle can be parked, which is newly detected after the start of the parking assistance. Therefore, in S9, a new parking section in which the vehicle can be parked is also detected other than the already detected parking section.

Then, if it is determined that there is another target candidate that is a candidate for the parking target position other than the initial target position (YES in S10), the processing proceeds to S11. On the other hand, if it is determined that there is no another target candidate that is a candidate for the parking target position other than the initial target position (NO in S10), the processing proceeds to S16.

Thereafter, in S11, the CPU 31 detects a situation of another target candidate together with a situation of the initial target position based on the sensing results of the various sensors acquired in S9. That is, during the parking assistance, processing of detecting the situation of the initial target position set as the parking target position by the sensors and processing of detecting a situation of a new candidate for the parking target position different from the initial target position are performed in parallel. More specifically, the "situation" includes a detailed shape of the parking section as the initial target position and a detailed shape of the parking section serving as another target candidate, presence or absence of an obstacle in the parking section, presence or absence and a vehicle type of another vehicle parked adjacent to the parking section, use restriction of the parking section (for example, a parking space for a person with disabilities), and the like. The type of another vehicle and the use restriction of the parking section can be detected by, particularly using the image recognition result of the camera. Then, based on the detected situation of the initial target position and the detected situation of another target candidate, evaluation scores of the initial target position and another target candidate are calculated. Here, the evaluation score is a value indicating suitability as the parking target position, and basically, the higher the evaluation score is, the more appropriate the parking target position is.

For example, the evaluation score in S11 is calculated according to the following criteria (A) to (F).
(A) It is determined whether there is an obstacle (for example, a small vehicle, a two-wheeled vehicle, or a color cone) in the parking section as the initial target position. Similarly, it is determined whether there is an obstacle in the parking section serving as another target candidate. Then, for the initial target position or another target candidate determined to have an obstacle, the evaluation score is calculated to be low (for example, 0 points) because parking cannot be performed.
(B) A size of the parking section as the initial target position and a size of the parking section serving as another target candidate are calculated. Then, the larger the parking section is, the easier the parking is, and thus, the evaluation score is calculated to be high. The size may be a length of an opening.
(C) The parking trajectory to the parking section as the initial target position is calculated, and then a time required to complete parking is calculated. Similarly, the parking trajectory to the parking section serving as another target candidate is calculated, and then a time required to complete parking is calculated. Then, the shorter the time required to complete parking is, the earlier the parking can be completed, and thus, the evaluation score is calculated to be high.
(D) In particular, when the parking lot in which the parking assistance is performed is a parking lot attached to a facility, a distance from the parking section as the initial target position to an entrance of the facility is calculated. Similarly, a distance from the parking section serving as another target candidate to the entrance of the facility is calculated. Then, the shorter the distance to the entrance of the facility is, the higher the convenience of the user after parking, and thus, the evaluation score is calculated to be high.
(E) The presence or absence of another vehicle parked adjacent to the parking section as the initial target position and the type of another vehicle are determined. Similarly, the presence or absence of another vehicle parked adjacent to the parking section serving as another target candidate and the type of another vehicle are determined. Then, for the initial target position or another target candidate for which it is determined that there is no adjacent other vehicle, the evaluation score is calculated to be high because parking is easy. The evaluation score is calculated to be low for the initial target position or another target candidate for which it is determined that there is another adjacent vehicle, but in particular, the evaluation score is calculated to be lower when the vehicle type of another vehicle is a specific vehicle type classified as a high-class vehicle because parking is difficult.
(F) It is determined whether the parking section as the initial target position and the parking section serving as another target candidate are parking sections with use restriction (for example, for the disabled). Then, the evaluation score is calculated to be low for the parking section with the use restriction because parking in such a section needs to be avoided.

However, the calculation criteria of the evaluation score in S11 are not limited to above (A) to (F), and the evaluation score may be calculated based on other criteria.

Thereafter, in S12, the CPU 31 compares the evaluation score calculated for the initial target position with the evaluation score calculated for another target candidate in S11. When there are a plurality of another target candidates, the comparison is performed for each another target candidate. Then, it is determined whether there is another target candidate having an evaluation score higher than that of the initial target position, that is, whether there is another target candidate more appropriate as the parking target position than the initial target position.

Then, if it is determined that there is another target candidate having an evaluation score higher than that of the initial target position, that is, there is another target candidate more appropriate as the parking target position than the initial target position (YES in S12), the processing proceeds to S13. On the other hand, if it is determined that there is no another target candidate having an evaluation score higher than that of the initial target position, that is, there is no another target candidate more appropriate as the parking target position than the initial target position (NO in S12), the processing proceeds to S16.

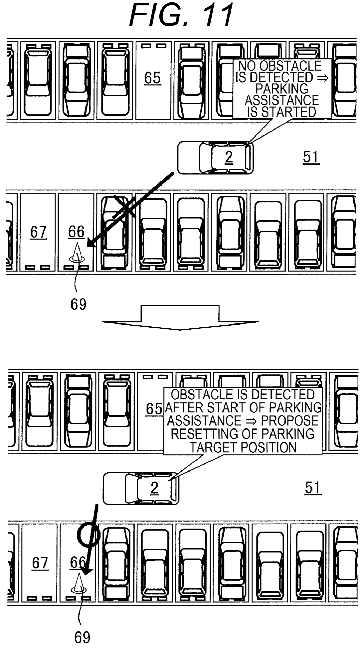

Here, a case in which it is determined in S12 that there is another target candidate having an evaluation score higher than that of the initial target position includes, for example, a situation illustrated in Fig. 11. Specifically, as illustrated in Fig. 11, when the parking sections 65 to 67 are present ahead in the traveling direction of the vehicle 2, an obstacle 69 in the parking section 66 cannot be detected from the vehicle 2 at the start of the parking assistance, and the parking assistance is started with the parking section 66 as the parking target position. That is, the parking section 66 is the initial target position, and the parking section 65 and the parking section 67 are another target candidates. In this case, the obstacle 69 is detected when the vehicle 2 for which the parking assistance is started approaches the parking section 66. As a result, the evaluation score for the parking section 66 is calculated to be low according to the criterion (A), the evaluation score for the parking section 65 or the parking section 67 is higher than that for the parking section 66, and the determination in S12 is YES.

Then, in S13, the CPU 31 makes a proposal to change the parking target position (reset the parking target position) to another target candidate whose evaluation score is calculated to be higher than that of the initial target position. When there is a plurality of another target candidates determined to have an evaluation score higher than that of the initial target position, another target candidate having the highest evaluation score is basically set as a proposal target. However, all another target candidates determined to have evaluation scores higher than that of the initial target position may be set as the proposal targets, or a predetermined number of another target candidates in descending order of the evaluation scores may be set as the proposal targets.

Here, it is assumed that a content of the proposal made in S13 is different between a situation in which it is difficult to continue the parking assistance to the currently set parking target position and a situation in which it is possible to continue the parking assistance to the currently set parking target position. The situation in which it is difficult to continue the parking assistance to the currently set parking target position is, for example, a case in which there is an obstacle in the parking section at the currently set parking target position as illustrated in Fig. 11.
1. A situation in which it is difficult to continue the parking assistance to the currently set parking target position
   A first option for changing the parking target position to another target candidate and a second option for stopping the parking assistance are proposed as selection candidates.
2. A situation in which it is possible to continue the parking assistance to the currently set parking target position
   A first option for continuing the parking assistance without changing the parking target position to another target candidate and a second option for changing the parking target position to another target candidate are proposed as selection candidates.

The proposal made in S13 may be made in a state in which the parking assistance for the vehicle is temporarily interrupted and the vehicle is stopped, or conversely, may be made in a state in which the parking assistance is continued. When the proposal is made in the state in which the parking assistance is continued, in addition to the first option and the second option described above, a third option of "interrupting the parking assistance" may be proposed as a selection candidate, such that the user can take his/her time to choose between the two options. When the user selects the third option (interruption), the vehicle may be stopped after the selection to temporarily interrupt the parking assistance, and then the first option and the second option described above may be proposed again as the selection candidates. When an option other than the option to stop the parking assistance is selected thereafter, the parking assistance that is interrupted after the selection is resumed. As a result, the user can select whether to change the parking target position to another target candidate or whether to stop the parking assistance with a time margin in a state in which the parking assistance is temporarily interrupted.

The proposal of S13 may be made by screen display using the liquid crystal display 4, or may be made by voice output from the speaker 5. When the proposal is made using the liquid crystal display 4, the parking target position (initial target position) set at the time of making the proposal and the position of another target candidate determined to have an evaluation score higher than that of the initial target position in S12 are displayed in the overhead image 46 to be identifiable by the user. It is desirable to display in a comparable manner the parking trajectory until parking at the parking target position set at the time of making the proposal and the parking trajectory until parking at another target candidate determined to have an evaluation score higher than that of the initial target position in S12.

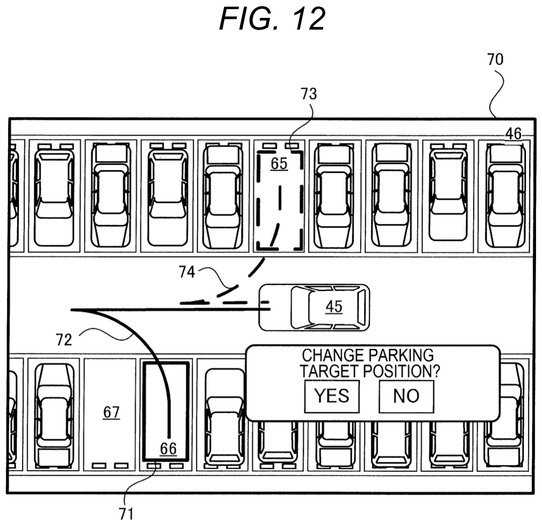

For example, Fig. 12 is a diagram illustrating a proposal screen 70 for proposing a change of the parking target position to the parking section 65 when the parking target position is set in the parking section 66. As illustrated in Fig. 12, on the proposal screen 70, a frame 71 for identifying the parking section 66 set as the parking target position at the time of making the proposal, a parking trajectory 72 until parking in the parking section 66, a frame 73 for identifying the parking section 65 that is another target candidate, and a parking trajectory 74 until parking in the parking section 65 are displayed superimposed on the overhead image 46. Icons of "NO (first option)" and "YES (second option)" to be selected by the user are also displayed. After visually recognizing the frames 71 and 73 and the parking trajectories 72 and 74, the user selects the icon of "NO" when continuing the parking assistance to the parking section 66, and selects the icon of "YES" when changing the parking target position to the parking section 65. Although not illustrated, an icon for selecting to stop the parking assistance may be additionally displayed.

In S14, the CPU 31 determines whether the user agrees with the proposal of S13. The agreement of the user on the proposal of S13 means that the user agrees to discard the setting of the currently set parking target position and to reset another target candidate determined to have an evaluation score higher than that of the initial target position in S12 as a new parking target position (that is, to change the parking target position). On the other hand, the disagreement of the user on the proposal of S13 means that the user selects to maintain the setting of the currently set parking target position (that is, not to change the parking target position). The determination of the agreement of the user in S14 may be made based on, for example, an operation of the touch panel, or may be made by recognizing the voice of the user through voice recognition. When the user selects to stop the parking assistance in response to the proposal of S13, the parking assistance processing program is ended at that time.

Then, if it is determined that the user agrees with the proposal of S13 (YES in S14), the processing proceeds to S15. On the other hand, if it is determined that the user does not agree with the proposal of S13 (NO in S14), the processing proceeds to S16.

In S15, the CPU 31 resets another target candidate, which the user agrees to reset as the parking target position, as the parking target position. That is, the parking target position of the currently performed parking assistance is changed during the assistance.

In S16, the CPU 31 continuously performs the parking assistance for parking at the currently set parking target position. Therefore, when the parking target position is reset (changed) in S15, parking assistance for parking at the reset parking target position is performed thereafter. When the parking target position is reset, the CPU 31 newly calculates a parking trajectory for parking the host vehicle from the current position of the vehicle to the reset parking target position, and vehicle control of the steering, the drive source, the brake, and the like is automatically performed such that the vehicle travels at a designated speed along the calculated parking trajectory. If a turn is required to allow the vehicle to enter the parking section, shift positions are automatically switched. The above parking assistance is continuously performed until parking at the parking target position is completed.

Subsequently, in S17, the CPU 31 determines whether the parking assistance is completed. Specifically, it is determined that the parking assistance is completed when the movement of the vehicle to the currently set parking target position is completed.

Then, if it is determined that the parking assistance is completed (YES in S17), the parking assistance processing program is ended. On the other hand, if it is determined that the parking assistance is not completed (NO in S17), the processing proceeds to S9.

After the parking target position is changed from the initial target position to another target candidate, the parking target position can be further changed. That is, after a first change (S15) of the parking target position is performed, when another more appropriate candidate for the parking target position than the parking target position after the first change is detected (YES in S12), a second proposal (S13) of the change of the parking target position may be performed. Similarly, it is also possible to propose third and fourth changes of the parking target position. However, the proposal of the change of the parking target position in S13 is made until the timing when the change to another parking target position is possible. For example, it is desirable not to make the proposal of S13 even when a determination condition in S12 is satisfied after the reversing for entering the parking section is already started. Alternatively, the proposal of the change of the parking target position in S13 may be made until the current parking target position can be reliably sensed by the sensors or the like (that is, until it can be confirmed that the vehicle can be parked at the parking target position).

As described above in detail, according to the parking assistance device 1 and a computer program executed by the parking assistance device 1 according to the present embodiment, during the execution of the parking assistance for the vehicle 2 for parking at the parking target position, when there is a new candidate for the parking target position different from the currently set parking target position, a proposal is made (S13) to change the parking target position to the new candidate for the parking target position. Therefore, it is possible to give the user an opportunity to change the parking target position to the new candidate for the parking target position when the presence of a more appropriate candidate for the parking target position can be grasped after the parking assistance is started.

The parking section that is located in the traveling direction of the vehicle 2 and faces the passage before the vehicle 2 travels is detected by the LiDAR sensor 10 in which the traveling direction of the vehicle 2 is set as the detection range (S3), and the parking assistance for the vehicle for parking at the parking target position is executed (S8) after setting the detected parking section as the parking target position (S7). Therefore, it is possible to give the user the opportunity to change the parking target position to a new candidate for the parking target position, in particular, when the parking section located at a position away from the vehicle is detected and the detected parking section is set as the parking target position and when it is possible to grasp that the parking section is actually unsuitable for parking after the parking assistance is started.

The content of the proposal of S13 proposes at least the first option for changing the parking target position to the new candidate for the parking target position and the second option for stopping the parking assistance as the selection candidates. Therefore, for example, in a situation in which it is difficult to continue the parking assistance to the currently set parking target position, it is possible to select whether to continue the parking assistance after changing the parking target position or stop the parking assistance by an intention of the user.

The content of the proposal of S13 proposes at least the first option for continuing the parking assistance without changing the parking target position to the new candidate for the parking target position and the second option for changing the parking target position to the new candidate for the parking target position as the selection candidates. Therefore, for example, in a situation in which the parking assistance to the currently set parking target position can be continued, it is possible to select whether to continue the parking assistance without changing the parking target position or to continue the parking assistance after changing the parking target position according to the intention of the user.

It is to be understood that this disclosure is not limited to the above embodiment, and various improvements and modifications can be made without departing from the scope of this disclosure.

For example, in the present embodiment, as the vehicle surroundings image displayed on the liquid crystal display 4 when the parking assistance is performed, the overhead image generated from the captured images captured by the cameras including the front camera 6, the rear camera 7, and the side cameras 8A and 8B is displayed on the liquid crystal display 4, but the vehicle surroundings image displayed on the liquid crystal display 4 may be a bird's-eye view image viewed obliquely downward instead of the overhead image. The captured image itself captured by the camera may be displayed without being processed. Instead of an image of the actual view, a virtual image in which the surroundings of the vehicle is reproduced by CG may be displayed.

In the present embodiment, regarding the proposal for changing the parking target position in S13, the first option and the second option are proposed as options, but the content of the proposal is not limited to the content of proposing the options as described above. For example, another target candidate may be displayed on the liquid crystal display 4 to indicate that a change to a new parking target position is possible. Then, when the user selects another target candidate on the liquid crystal display 4 by screen touch, voice input, or other methods, it may be regarded that the user agrees to the resetting (YES in S14).

In the present embodiment, the parking section in which the vehicle can be parked is detected by the sensors (the cameras, the ultrasonic sensors 9A to 9L, and the LiDAR sensor 10) provided in the host vehicle (S3 and S9) and is set as the parking target position (S7 and S15), but the parking target position may be set based on information acquired from sources other than the sensors provided in the host vehicle. For example, it is also possible to acquire vacancy information on a parking section from a management server that manages a parking lot and set a parking target position based on the vacancy information. Similarly, it is also possible to detect a new candidate for the parking target position based on the vacancy information during the parking assistance.

An execution order of the steps of the parking assistance processing program illustrated in Fig. 4 is an example, and the execution order can be changed appropriately. A part of the steps included in the parking assistance processing program can be omitted. For example, the determination processing of S12 may be omitted. In this case, even when there is no other candidate for the parking target position more appropriate than the initial target position, a proposal to change the parking target position is made if there is another candidate for the parking target position.

In the present embodiment, the processing of the parking assistance processing program (Fig. 4) is executed by the driving assistance ECU 11 of the parking assistance device 1, and an execution entity can be changed appropriately. For example, a control unit of the liquid crystal display 4, a vehicle control ECU, a control unit of a navigation device, and other in-vehicle devices may execute the processing.

### Appendix

The above embodiment also discloses the following techniques. In the following description, names or expressions of the corresponding configurations in the embodiment and reference numerals used in the drawings are parenthesized for reference. However, the components of each aspect are not limited to the Appendix.

### Technique A

The parking assistance device (1) according to claim 1, in which
a candidate for the parking target position at which the vehicle (2) parks is detected by using detection sensors (6, 7, 8A, 8B, 9A to 9L, and 10) provided on the vehicle,
the detected candidate for the parking target position is set as the parking target position of the vehicle, and the parking assistance for the vehicle is then performed for parking at the parking target position, and
during the execution of the parking assistance for the vehicle, the proposal is made when the new candidate for the parking target position different from the parking target position is detected by the detection sensor.

Accordingly, when the presence of a more appropriate candidate for the parking target position can be detected by the detection sensor provided in the vehicle after the parking assistance is started, it is possible to give a user an opportunity to change the parking target position to the new candidate for the parking target position.

### Technique B

The parking assistance device (1) according to Technique A, in which
during the execution of the parking assistance for the vehicle (2), processing of detecting a situation of a candidate set as the parking target position by the detection sensor (6, 7, 8A, 8B, 9A to 9L, and 10) and processing of detecting a situation of the new candidate for the parking target position different from a candidate set as the parking target position are performed in parallel.

Accordingly, during the execution of the parking assistance, the situation of the currently set parking target position is detected, and when there is another parking section that is a candidate for the parking target position, a situation of the parking section can also be detected.

### Technique C

The parking assistance device (1) according to claim 1, in which
during the execution of the parking assistance for the vehicle (2), when there is the new candidate for the parking target position different from the parking target position,
the parking target position and the new candidate for the parking target position are compared, and
when the new candidate for the parking target position is more appropriate as the parking target position, the proposal is made to change the parking target position to the new candidate for the parking target position.

Accordingly, when the presence of a more appropriate candidate for the parking target position can be grasped after the parking assistance is started, it is possible to give the user the opportunity to change the parking target position to the new candidate for the parking target position.

### Technique D

The parking assistance device (1) according to Technique C, in which the comparison between the parking target position and the new candidate for the parking target position is performed in consideration of at least one of presence or absence of an obstacle (69) in a parking section serving as the parking target position, a size of the parking section serving as the parking target position, a time until parking is completed, a position of the parking section serving as the parking target position, a situation of another vehicle parked adjacent to the parking section serving as the parking target position, and use restriction of the parking section serving as the parking target position.

Accordingly, when the presence of another candidate for the parking target position can be confirmed after the parking assistance is started, it is possible to accurately determine which of the currently set parking target position and the other candidate for the parking target position is appropriate.

### Technique E

The parking assistance device (1) according to claim 1, in which when the proposal is made, a parking trajectory (72) until parking at the parking target position set at the time of making the proposal and a parking trajectory (74) until parking at the new candidate for the parking target position are displayed in a comparable manner.

Accordingly, when the presence of another candidate for the parking target position can be confirmed after the parking assistance is started, it is possible for the user to easily determine which of the currently set parking target position and the other candidate for the parking target position is appropriate.

### Technique F

The parking assistance device (1) according to claim 3 or 4, in which when the proposal is made in a state in which the parking assistance for the vehicle is continued, a third option for interrupting the parking assistance is also proposed as a selection candidate.

Accordingly, when the proposal is made to change the parking target position to the new candidate for the parking target position in the state in which the parking assistance is continued, the user can temporarily interrupt the parking assistance being executed as necessary. Then, the user can select the first option and the second option with a time margin in a state in which the parking assistance is temporarily interrupted.

## Claims

1. A parking assistance device (1), wherein
during execution of parking assistance for a vehicle (2) for parking at a parking target position, when there is a new candidate for the parking target position different from the parking target position, a proposal is made to change the parking target position to the new candidate for the parking target position.

2. The parking assistance device according to claim 1, wherein
by a detection sensor (6, 7, 8A, 8B, 9A to 9L, and 10) in which a traveling direction of the vehicle is set as a detection range, a parking section located in the traveling direction of the vehicle and facing a passage before the vehicle travels is detected, and
the detected parking section is set as the parking target position, and the parking assistance for the vehicle for parking at the parking target position is executed.

3. The parking assistance device according to claim 1 or 2, wherein
a content of the proposal proposes, as selection candidates, at least a first option for changing the parking target position to the new candidate for the parking target position and a second option for stopping the parking assistance.

4. The parking assistance device according to claim 1 or 2, wherein
a content of the proposal proposes, as selection candidates, at least a first option for continuing the parking assistance without changing the parking target position to the new candidate for the parking target position and a second option for changing the parking target position to the new candidate for the parking target position.
